# FASCICULE DE BREVET EUROPEEN

(11) **EP 2 895 806 B1**
(45) Date de publication et mention de la délivrance du brevet: **21.07.2021**
(21) Numéro de dépôt: 13756418.3
(22) Date de dépôt: 27.08.2013
(51) Int. Cl.: F25B 47/00, F25B 25/00, F25B 27/02, B60H 1/00, B60H 1/32

(54) **DISPOSITIF DE CONDITIONNEMENT THERMIQUE D'UN HABITACLE D'UN VEHICULE ELECTRIQUE**
VORRICHTUNG ZUR KLIMATISIERUNG EINES INNENRAUMS EINES ELEKTROFAHRZEUGS
DEVICE FOR THERMALLY CONDITIONING AN INTERIOR OF AN ELECTRIC VEHICLE

(30) Priorité: 14.09.2012 FR 1258631
(43) Date de publication de la demande: 22.07.2015
(73) Titulaire: Valeo Systemes Thermiques, 78321 Le Mesnil-Saint-Denis (FR)
(72) Inventeur: YAHIA, Mohamed, F-75005 Paris (FR); NICOLAS, Bertrand, F-92150 SURESNES (FR); KARL, Stefan, F-78112 Fourqueux (FR)
(74) Mandataire: Tran, Chi-Hai
(86) Numéro de dépôt international: PCT/EP2013/067732
(87) Numéro de publication internationale: WO 2014/040854

(56) Documents cités:
- EP-A1- 2 299 205
- DE-A1- 19 741 312
- JP-A- 2004 042 759
- US-A- 4 172 493
- None

## Description

Le secteur technique de la présente invention est celui des ensembles ou systèmes utilisés pour conditionner au moins un flux d'air entrant dans un habitacle de véhicule automobile. Selon l'invention, un tel système assure également le conditionnement thermique de composants constitutifs d'une chaîne électrique de traction de ce véhicule. Plus particulièrement, l'invention vise un circuit de fluide réfrigérant combiné à un circuit de fluide caloporteur, où le circuit de fluide réfrigérant est utilisé en mode chauffage, autrement appelé pompe à chaleur. Pendant cette phase de fonctionnement, le circuit de fluide caloporteur est agencé et piloté pour dégivrer un échangeur du circuit de fluide réfrigérant.

Un véhicule automobile est classiquement équipé d'une boucle de climatisation à l'intérieur de laquelle circule un fluide frigorigène. Cette boucle comprend un compresseur, un condenseur, un détendeur et un évaporateur parcourus par le fluide frigorigène. L'évaporateur est monté dans une installation de ventilation, chauffage et/ou climatisation généralement montée dans l'habitacle du véhicule, pour fournir à ce dernier un flux d'air chaud ou un flux d'air froid en fonction d'une demande de l'utilisateur du véhicule. Le condenseur est quant à lui classiquement installé en face avant du véhicule pour être traversé par un flux d'air extérieur au véhicule.

Cette boucle de climatisation peut être utilisée en mode refroidissement ou en mode chauffage. En mode refroidissement, le fluide réfrigérant est envoyé vers le condenseur où il est refroidi par le flux d'air extérieur. Puis, le fluide réfrigérant circule vers le détendeur où il subit un abaissement de sa pression avant d'entrer dans l'évaporateur. Le fluide réfrigérant traversant l'évaporateur est alors chauffé par le flux d'air entrant dans l'installation de ventilation, ce qui se traduit corrélativement par un refroidissement de ce flux d'air dans le but de climatiser l'habitacle du véhicule. Le circuit étant une boucle fermée, le fluide réfrigérant retourne alors vers le compresseur.

En mode chauffage, le fluide est mis en circulation par le compresseur qui l'envoie vers l'évaporateur. Ce dernier se comporte alors comme un condenseur, où le fluide réfrigérant est refroidi par l'air circulant dans l'installation de ventilation. Cet air se chauffe donc au contact de l'évaporateur et apporte ainsi des calories à l'habitacle du véhicule. Après passage dans l'évaporateur, le fluide réfrigérant est détendu par un détendeur avant d'arriver dans le condenseur. Le flux d'air extérieur chauffe alors le fluide réfrigérant. Le flux d'air extérieur est par conséquent plus froid après son passage dans le condenseur comparé à sa température avant son passage au travers du condenseur. Le fluide réfrigérant retourne alors vers le compresseur.

En mode chauffage, le condenseur installé à l'extérieur de l'habitacle se comporte comme un évaporateur. Autrement dit, au cours du cheminement du fluide réfrigérant à l'intérieur du condenseur, le fluide réfrigérant capte de la chaleur au flux d'air ambiant. Dans ce dernier mode, il est des conditions climatiques au cours desquelles se forme du givre sur le condenseur utilisé en tant qu'évaporateur. Ceci est le résultat du refroidissement opéré par le condenseur, fonctionnant en tant qu'évaporateur, qui abaisse la température du flux d'air ambiant le traversant en dessous de zéro degré Celsius, provoquant ainsi un gel de l'humidité présente dans le flux d'air ambiant. Cette situation est problématique car le givre obstrue le passage du flux d'air ambiant au travers du condenseur, ce qui dégrade fortement les performances de la boucle de climatisation en mode chauffage au point de ne plus assurer la fonction de chauffage du flux d'air envoyé dans l'habitacle. Il en découle finalement une diminution des performances thermiques de la boucle de climatisation, ce qu'il convient d'éviter.

L'état de l'art est représenté dans les documents JP 2004 042759 A, US 4 172 493 A et EP 2 299 205A1.

Le but de la présente invention est donc de résoudre l'inconvénient décrit ci-dessus principalement en opérant un chauffage préalable de l'air ambiant avant que celui-ci ne traverse l'échangeur extérieur, quand celui-ci est utilisé en tant qu'évaporateur.
L'invention a donc pour objet un dispositif ou ensemble de conditionnement thermique selon la revendication 1.

Selon un exemple de réalisation alternatif, le moyen de contrôle est une vanne trois voies installée au droit de l'intersection.

Dans le dispositif selon l'invention, la première vanne deux voies a pour fonction d'autoriser ou d'interdire une circulation du fluide caloporteur vers le premier radiateur. Il en va de même pour la deuxième vanne deux voies à l'égard du deuxième radiateur.

La première vanne deux voies est installée dans la troisième branche entre l'intersection et le premier radiateur, alors que la deuxième vanne deux voies est installée dans la deuxième branche entre l'intersection et le deuxième radiateur.

Selon un mode de réalisation, la troisième branche est raccordée à la deuxième branche en aval du deuxième radiateur. Le fluide caloporteur ayant traversé le premier radiateur rejoint ainsi le circuit de fluide caloporteur sans traverser le deuxième radiateur.

Selon une caractéristique de l'invention, la première branche reçoit la première pompe de circulation. Une telle pompe est avantageusement une pompe électrique.

On notera que la première pompe de circulation est apte à mettre en circulation le fluide caloporteur dans la première branche, dans la deuxième branche et/ou dans la troisième branche.

L'invention concerne également une chaîne électrique de traction d'un véhicule électrique comprenant un dispositif de conditionnement thermique tel que présenté ci-dessus.

Dans une telle chaîne, au moins un moteur électrique génère le déplacement du véhicule électrique, la chaîne électrique de traction comprenant une batterie et un groupe électrogène qui forme le composant associé au premier échangeur thermique.

Selon un exemple de réalisation de cette chaîne, le circuit de fluide caloporteur peut comprendre :
- un deuxième échangeur thermique associé au moteur électrique,
- un troisième échangeur thermique associé à la batterie,
- un quatrième échangeur thermique apte à chauffer un flux d'air intérieur envoyé dans un habitacle du véhicule.

Dans un exemple de chaîne selon l'invention, le circuit de fluide réfrigérant comprend un premier échangeur fluide réfrigérant/fluide caloporteur agencé pour influencer la température du troisième échangeur thermique, un deuxième échangeur fluide réfrigérant/fluide caloporteur agencé pour influencer la température du quatrième échangeur thermique, l'échangeur intérieur étant traversé par le flux d'air intérieur et forme un évaporateur.

Selon un exemple complémentaire ou alternatif, la chaîne peut comprendre le circuit de fluide caloporteur dans lequel un échangeur thermique est associé à un dispositif de freinage du véhicule, et/ou un échangeur thermique associé à un dispositif de stockage thermique.

L'association échangeur thermique - composant évoqué ci-dessus signifie que l'échangeur thermique est dédié au chauffage et/ou au refroidissement du composant considéré. Selon un exemple de réalisation, l'échangeur thermique est en contact physique avec le composant.

Un tout premier avantage selon l'invention réside dans la possibilité de dégivrer aisément l'échangeur thermique installé au niveau de la face avant du véhicule. Le fluide caloporteur est agencé pour capter des calories en un ou plusieurs points de la chaîne électrique de traction, de manière à les transférer au flux d'air extérieur avant que ce dernier ne traverse l'échangeur extérieur constitutif du circuit de fluide réfrigérant. On évite ainsi toute dégradation de la fonction de chauffage de l'habitacle, puisque la différence entre la température du flux d'air extérieur et la température du fluide réfrigérant qui traverse l'échangeur extérieur est volontairement augmentée par l'agencement proposé dans la revendication principale.

D'autres caractéristiques, détails et avantages de l'invention ressortiront plus clairement à la lecture de la description donnée ci-après à titre indicatif en relation avec des dessins dans lesquels :
- la figure 1 est une vue schématique illustrant les composants constitutifs d'un exemple de réalisation du dispositif selon l'invention, en l'absence de circulation des fluides,
- la figure 2 est une vue schématique illustrant le dispositif selon l'invention en un premier mode de fonctionnement,
- la figure 3 est une vue schématique illustrant le dispositif selon l'invention en un deuxième mode de fonctionnement.

Dans la description ci-dessous, les termes amont et aval sont utilisés. Par convention, ces termes s'analysent au regard du composant concerné, par rapport au sens du fluide dans le circuit concerné et selon le mode de fonctionnement envisagé.

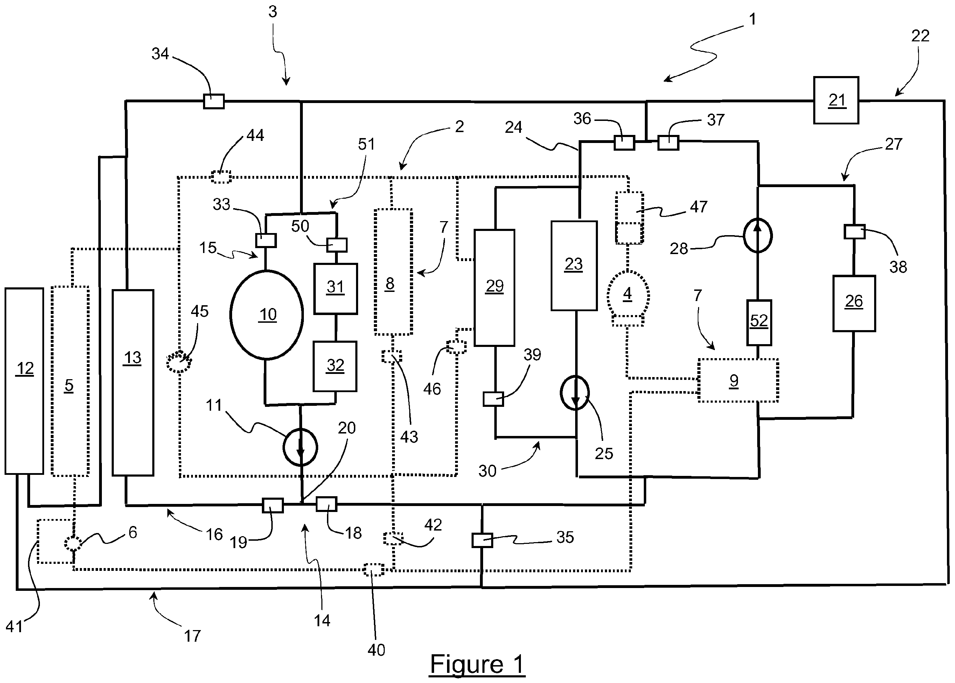

La figure 1 montre un dispositif de conditionnement thermique 1 conforme à l'invention. Ce dernier comprend un circuit de fluide réfrigérant 2, représenté en trait interrompu, et un circuit de fluide caloporteur 3, illustré en trait plein. Ce dispositif de conditionnement thermique 1 coopère avec un système de ventilation, de chauffage et/ou de climatisation destiné à modifier les paramètres aérothermiques de l'air contenu ou envoyé à l'intérieur d'un habitacle du véhicule.

Une telle modification est obtenue à partir de la délivrance d'au moins un flux d'air pulsé à l'intérieur de l'habitacle, ci-après appelé flux d'air intérieur. A cet effet, le système de ventilation, de chauffage et/ou de climatisation comprend un boîtier, réalisé en matière plastique, qui loge un pulseur pour faire circuler le flux d'air intérieur depuis au moins une bouche d'admission d'air vers au moins une bouche de délivrance d'air que comporte le boîtier. Un tel système de ventilation, de chauffage et/ou de climatisation est logé par exemple sous une planche de bord du véhicule et canalise la circulation du flux d'air intérieur.

Le dispositif de conditionnement thermique 1 comprend le circuit de fluide réfrigérant 2 à l'intérieur duquel circule un fluide réfrigérant qui apporte des calories (mode chauffage) ou des frigories (mode refroidissement), permettant ainsi au système de chauffer ou de refroidir le flux d'air intérieur.

Pour ce faire, le circuit de fluide réfrigérant 2 peut comporter un ou plusieurs échangeurs thermiques entre le fluide réfrigérant et soit de l'air, soit un fluide caloporteur circulant dans le circuit de fluide caloporteur 3, un tel fluide caloporteur étant par exemple de l'eau comportant du glycol.

Le fluide réfrigérant présent dans le circuit de fluide réfrigérant 2 est par exemple du type d'un fluide super-critique, tel que du dioxyde de carbone, par exemple, connu sous l'appellation R744. Il peut aussi s'agir d'un fluide sous-critique, tel que l'hydrofluorocarbone, connu sous le terme R134a, ou un fluide frigorigène à faible impact sur l'effet de serre, c'est-à-dire qui soit en mesure d'offrir une solution durable pour les climatiseurs automobiles, connu sous la dénomination HFO1234yf.

Le circuit de fluide réfrigérant 2 comprend au moins un compresseur 4 pour comprimer le fluide réfrigérant à l'état gazeux. Il comprend aussi un échangeur de chaleur extérieur 5, apte à fonctionner en tant que refroidisseur de gaz ou condenseur ou évaporateur, dont la fonction est d'assurer un échange thermique entre le fluide réfrigérant et un flux d'air extérieur. Un tel échangeur de chaleur est qualifié d'extérieur en ce sens qu'il est installé au niveau d'une partie frontale du véhicule, de manière à être exposé au flux d'air extérieur mis en mouvement notamment par le déplacement du véhicule.

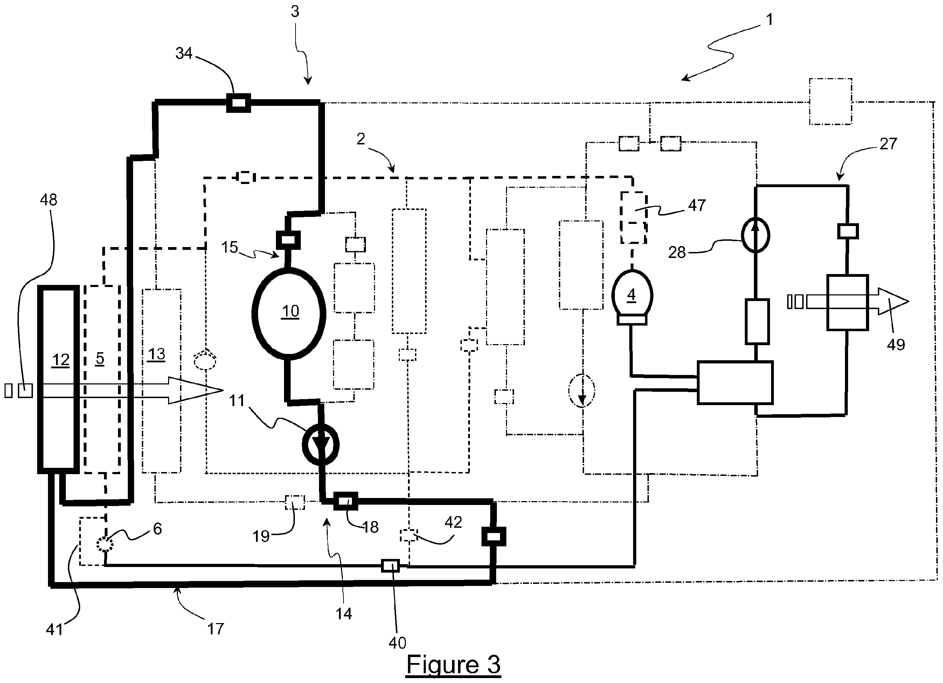

Selon l'invention, le circuit de fluide réfrigérant 2 comprend encore un organe de détente, ci-après appelé premier organe de détente 6, installé entre le compresseur 4 et l'échangeur de chaleur extérieur 5. Un tel premier organe de détente 6 est notamment utilisé lorsque le circuit de fluide réfrigérant 2 fonctionne en mode de chauffage, comme cela sera abordé plus en détails à la description en référence à la figure 3.

Selon l'exemple illustré sur la figure 1, le premier organe de détente 6 est installé sur le circuit de fluide réfrigérant 2 immédiatement en amont de l'échangeur de chaleur extérieur 5.

Toujours selon l'invention, le circuit de fluide réfrigérant 2 comprend un échangeur de chaleur intérieur 7. D'une manière générale, un tel échangeur agit directement ou indirectement sur la température du flux d'air intérieur. Il s'agit donc d'un ou plusieurs composants aptes à chauffer ou refroidir le flux d'air intérieur.

L'échangeur de chaleur intérieur 7 est un évaporateur 8, dont la fonction est de capter des calories dans le flux d'air intérieur quand le système fonctionne en un mode de refroidissement. Un tel évaporateur 8 réalise un échange thermique directement entre le fluide réfrigérant et le flux d'air intérieur, l'évaporateur 8 comprenant un faisceau de tubes délimitant des chambres dans lesquelles circule le fluide réfrigérant et à l'extérieur desquelles le flux d'air intérieur passe. L'évaporateur 8 est logé dans l'installation de ventilation, de chauffage et/ou de climatisation. Selon le mode de refroidissement, le point chaud du circuit de fluide réfrigérant est généré par l'échangeur de chaleur extérieur 5, alors que le point froid est généré par l'évaporateur 8.

Selon l'invention, un échangeur complémentaire de chaleur intérieur 7 est un échangeur fluide réfrigérant/fluide caloporteur, ci-après appelé deuxième échangeur 9 fluide réfrigérant/fluide caloporteur, agencé pour influencer indirectement la température du flux d'air intérieur. Le deuxième échangeur 9 fluide réfrigérant/fluide caloporteur assure une transmission des calories présentes dans le fluide réfrigérant au fluide caloporteur pour que celui-ci les transportent jusqu'à un aérotherme, ce dernier formant un des échangeurs thermiques du circuit de fluide caloporteur 3.

Le dispositif de conditionnement thermique 1 selon l'invention comprend encore le circuit de fluide caloporteur 3, ce dernier étant constitué d'au moins un premier échangeur thermique 10 associé à un composant, une première pompe de circulation 11 du fluide caloporteur, un premier radiateur 12 et un deuxième radiateur 13, ces deux radiateurs étant par exemple distincts.

Le premier échangeur thermique 10 est agencé pour capter des calories générées par un composant d'une chaîne électrique de traction du véhicule. Le premier échangeur thermique 10 assure donc un refroidissement de ce composant, ce dernier pouvant être par exemple un groupe électrogène, c'est-à-dire un moteur à combustion interne couplé à un générateur électrique de manière à créer l'énergie électrique utilisée pour mettre en mouvement le véhicule électrique. On notera que le moteur à combustion interne de ce groupe électrogène n'est en revanche pas utilisé pour générer une force mécanique en vu de déplacer le véhicule.

La première pompe de circulation 11 assure le transport du fluide caloporteur au sein du circuit de fluide caloporteur 3. Selon un exemple, une telle première pompe de circulation 11 est par exemple une pompe électrique, c'est-à-dire comprenant un moteur électrique. La première pompe de circulation 11 est installée dans le circuit de fluide caloporteur 3 directement en aval du premier échangeur thermique 10.

Le premier radiateur 12 et le deuxième radiateur 13 sont des échangeurs de chaleur entre, d'une part le fluide caloporteur chargé de calories récupérées par exemple au niveau du premier échangeur thermique 10, et d'autre part le flux d'air extérieur qui traverse l'échangeur de chaleur extérieur 5.

Comme l'échangeur de chaleur extérieur 5, le premier radiateur 12 et le deuxième radiateur 13 sont installés au niveau d'une partie frontale du véhicule, de manière à être exposés au flux d'extérieur mis en mouvement notamment par le déplacement du véhicule.

Selon l'invention, l'échangeur de chaleur extérieur 5, le premier radiateur 12 et le deuxième radiateur 13 sont disposés les uns par rapport aux autres de manière particulière. En effet, ces trois échangeurs sont successivement traversés par le flux d'air extérieur, l'échangeur de chaleur extérieur 5 étant interposé entre le premier radiateur 12 et le deuxième radiateur 13. Selon le sens de déplacement du flux d'air extérieur par rapport à ces trois échangeurs, le premier radiateur 12 est traversé par ce flux d'air extérieur en premier. Puis, le flux d'air extérieur traverse l'échangeur de chaleur extérieur 5. Enfin, ce flux d'air extérieur traverse le deuxième radiateur 13.

Selon l'invention, le dispositif de conditionnement thermique 1 comprend un moyen de contrôle 14 de la circulation du fluide caloporteur pour autoriser ou interdire une telle circulation depuis le premier échangeur thermique 10, soit exclusivement vers le premier radiateur 12, soit exclusivement vers le deuxième radiateur 13, soit à la fois vers le premier radiateur 12 et vers le deuxième radiateur 13. Un tel moyen de contrôle 14 gère ainsi une circulation du fluide caloporteur entre le premier échangeur thermique 10 et le deuxième radiateur 13, et/ou une circulation du fluide caloporteur entre le premier échangeur thermique 10 et le premier radiateur 12, de manière à chauffer le flux d'air extérieur préalablement à sa traversée de l'échangeur de chaleur extérieur 5.

Selon un exemple de réalisation, le circuit de fluide caloporteur 3 est constitué d'au mois trois branches référencées 15, 16 et 17. La première branche 15 reçoit le premier échangeur thermique 10 et la première pompe de circulation 11. La deuxième branche 16 reçoit quant à elle le deuxième radiateur 13. La première branche 15 connectée à la deuxième branche 16 forment une boucle fermée de fluide caloporteur. En parallèle de la deuxième branche 16, la troisième branche 17 reçoit le premier radiateur 12. Le moyen de contrôle 14 est installé à une intersection 20 de la première branche 15 avec la deuxième et la troisième branche. On notera enfin que la troisième branche 17 est raccordée à la deuxième branche 16 en aval du deuxième radiateur 13, selon le sens de circulation du fluide caloporteur quand il traverse ce dernier. On comprend ici que le fluide caloporteur ayant traversé le premier radiateur 12 ne traverse pas le deuxième radiateur 13.

Selon un exemple non représenté, le moyen de contrôle 14 est formé par une vanne trois voies positionnée à l'intersection 20 des première, deuxième et troisième branches 15 à 17. Une telle vanne trois voies comprend ainsi une entrée raccordée à la première branche 15, une première sortie raccordée à la deuxième branche 16 et une deuxième sortie raccordée à la troisième branche 17.

Selon l'exemple illustrée par la figure 1, le moyen de contrôle 14 est formée par une première vanne deux voies 18 qui autorise ou interdit une circulation du fluide caloporteur depuis la première branche 15 vers la troisième branche 17. En complément, il est prévu une deuxième vanne deux voies 19 qui autorise ou interdit une circulation du fluide caloporteur depuis la première branche 15 vers la deuxième branche 16. De manière particulière, la première vanne deux voies 18 fait partie de la troisième branche 17, et elle est installée dans cette dernière entre l'intersection 20 et le premier radiateur 12, notamment une entrée en fluide caloporteur de ce radiateur. De manière similaire, la deuxième vanne deux voies 19 est installée dans la deuxième branche 16 entre l'intersection 20 et le deuxième radiateur 13, par exemple entre cette intersection 20 et une entrée de ce radiateur.

De manière optionnelle mais néanmoins intéressante, le dispositif de conditionnement thermique 1 peut comprendre un circuit de fluide caloporteur 3 dans lequel des échangeurs thermiques ont été ajoutés. Il est ainsi prévu un deuxième échangeur thermique 21 associé à un moteur électrique qui assure le déplacement du véhicule électrique. Un tel deuxième échangeur thermique 21 est par exemple installé dans une quatrième branche 22 constitutive du circuit de fluide caloporteur 3. On notera que cette quatrième branche est en parallèle des première, deuxième et troisième branches 15 à 17.

Le circuit de fluide caloporteur 3 peut également comporter un troisième échangeur thermique 23 associé à une batterie qui assure un stockage de l'énergie électrique utilisée notamment pour mettre en mouvement le véhicule. Ce troisième échangeur thermique 23 est installé dans une cinquième branche 24 du circuit de fluide caloporteur 3, cette cinquième branche 24 étant en parallèle des première à quatrième branches 15 à 17 et 22. Cette cinquième branche 24 peut également comprendre une deuxième pompe de circulation 25 du fluide caloporteur.

Le circuit de fluide caloporteur 3 comprend un quatrième échangeur thermique 26 agencé pour transférer des calories présentes dans le fluide caloporteur au flux d'air intérieur envoyé dans l'habitacle. Ce quatrième échangeur 26 est notamment combiné au deuxième échangeur 9 fluide réfrigérant/fluide caloporteur en formant un premier sous-circuit 27. Une troisième pompe de circulation 28 est installée dans ce sous-circuit, ainsi qu'un radiateur électrique de chauffage 52. Ce premier sous-circuit 27 est raccordé au circuit de fluide caloporteur 3, en étant installé en parallèle des branches détaillés plus haut.

Selon l'exemple de réalisation, le circuit de fluide caloporteur 3 peut comprendre un cinquième échangeur thermique 31 associé à un dispositif de freinage du véhicule. Il est également possible de prévoir un sixième échangeur thermique 32 associé à un dispositif de stockage thermique, notamment un dispositif de stockage à chaleur latente. Ce cinquième échangeur thermique 31 et ce sixième échangeur thermique 32 sont installés dans une sixième branche 51 installée en parallèle du premier échangeur thermique 10. De manière particulière, le cinquième échangeur thermique 31 associé au dispositif de freinage du véhicule est immédiatement en amont du sixième échangeur thermique 32 associé au dispositif de stockage thermique. Il est ainsi possible de stocker un surplus thermique provenant du dispositif de freinage dans le dispositif de stockage, et de l'utiliser à un moment où il existe un déficit de chauffage sur le circuit de fluide caloporteur 3.

Toujours de manière optionnelle, le dispositif de conditionnement thermique 1 peut comporter un ou plusieurs échangeurs qui assurent un échange thermique entre le fluide caloporteur et le fluide réfrigérant. De tels échangeurs sont ainsi traversés à la fois par le fluide caloporteur et par le fluide réfrigérant. Selon un exemple de réalisation, il est prévu un premier échangeur 29 fluide réfrigérant/fluide caloporteur agencé pour influencer la température du troisième échangeur thermique 23. Ce premier échangeur 29 fluide réfrigérant/fluide caloporteur est ainsi combiné au troisième échangeur thermique 23, ainsi qu'à la deuxième pompe de circulation 25 de fluide caloporteur, pour former un deuxième sous-circuit 30, ce dernier étant installé dans le circuit de fluide caloporteur 3 de manière parallèle aux branches et/ou sous-circuit détaillées ci-dessus.

Le circuit de fluide caloporteur 3 comprend le deuxième échangeur 9 fluide réfrigérant/fluide caloporteur, ce dernier étant agencé pour influencer la température du quatrième échangeur thermique 26 et ainsi chauffer le flux d'air intérieur, c'est-à-dire envoyé dans l'habitacle.

Le dispositif de conditionnement thermique 1 peut encore comprendre une pluralité de dispositifs de gestion de la circulation du fluide caloporteur et du fluide réfrigérant. De tels dispositif de gestion sont par exemple des vannes deux voies ou des vannes trois voies apte à autoriser ou interdire une circulation de fluide à leurs travers.

En ce qui concerne le circuit de fluide caloporteur 3, il est prévu une troisième vanne deux voies 33 installé dans la première branche 15, notamment en amont du premier échangeur thermique 10. La circulation de fluide caloporteur dans la deuxième branche 16 et/ou dans la troisième branche 17 est également placée sous la dépendance d'une quatrième vanne deux voies 34, placée en aval du premier et du deuxième radiateur, et en amont de la première branche 15.

La troisième branche 17 reçoit une cinquième vanne deux voies 35 installée entre le moyen de contrôle 14 et une entrée du premier radiateur 12.

Une sixième vanne deux voies 36 est installée dans la cinquième branche 24, en amont du troisième échangeur thermique 23 affecté au conditionnement thermique de la batterie. Cette sixième vanne 36 autorise ou interdit une circulation de fluide caloporteur depuis la quatrième branche 22 vers le deuxième sous-circuit 30.

Une septième vanne deux voies 37 est installée dans le circuit de fluide caloporteur de manière à autoriser ou interdire une circulation de fluide caloporteur vers le premier sous-circuit 27.

On notera que la sixième vanne deux voies 36 et la septième vanne deux voies 37 peuvent être remplacées par une vanne trois voies.

Le premier sous-circuit 27 comprend également une huitième vanne deux voies 38, par exemple installée en amont du quatrième échangeur thermique 26. Lorsque la septième vanne deux voies 37 est fermée, le premier sous-circuit est isolé de la quatrième branche 22. La troisième pompe de circulation 28 peut ainsi mettre en œuvre une circulation en circuit fermé au sein du premier sous-circuit 27.

Le deuxième sous-circuit 30 comprend une neuvième vanne deux voies 39 dont la fonction est de gérer la circulation de fluide caloporteur entre le premier échangeur 29 fluide réfrigérant/fluide caloporteur et le troisième échangeur thermique 23. Une telle neuvième vanne deux voies 39 est par exemple installée immédiatement en amont du premier échangeur 29 fluide réfrigérant/fluide caloporteur. Lorsque la sixième vanne deux voies 36 est fermée, le deuxième sous-circuit est isolé de la quatrième branche 22. La deuxième pompe de circulation 25 peut ainsi mettre en œuvre une circulation en circuit fermé au sein du deuxième sous-circuit 30.

Le sixième branche 51 comprend une dixième vanne deux voies 50 qui gère la circulation du fluide caloporteur dans le cinquième et le sixième échangeur thermique, respectivement référencé 31 et 32. Selon l'exemple de réalisation de la figure 1, cette dixième vanne deux voies 50 est immédiatement en amont du cinquième échangeur thermique 31.

En ce qui concerne le circuit de fluide réfrigérant 2, le ou les dispositifs de gestion de la circulation de fluide réfrigérant prennent la forme d'une première valve deux voies 40 installée en aval du deuxième échangeur 9 fluide réfrigérant/fluide caloporteur et en amont du premier organe de détente 6. On notera que ce dernier comprend une conduite de contournement 41 dont la fonction est permettre de contourner le premier organe de détente quand l'échangeur de chaleur extérieur 5 est utilisé en tant que condenseur, c'est-à-dire lors d'un mode de refroidissement du flux d'air intérieur, notamment.

Une deuxième valve deux voies 42 gère la circulation de fluide réfrigérant vers l'évaporateur 8. Cette deuxième valve deux voies 42 est ainsi installée dans le circuit de fluide réfrigérant 2 entre le deuxième échangeur 9 fluide réfrigérant/fluide caloporteur et un deuxième organe de détente 43, ce dernier étant immédiatement en amont de l'évaporateur 8.

En aval de l'échangeur de chaleur extérieur 5, le circuit de fluide réfrigérant 2 comprend une troisième valve deux voies 44. Il est également prévu un clapet anti-retour 45 installé dans une portion du circuit de fluide réfrigérant située en parallèle de l'échangeur de chaleur extérieur 5 et reliée au premier échangeur 29 fluide réfrigérant/fluide caloporteur. Cette portion du circuit qui alimente ce premier échangeur 29 fluide réfrigérant/fluide caloporteur comprend encore un troisième organe de détente 46 installé en aval du clapet anti-retour 45, et immédiatement en amont du premier échangeur 29 fluide réfrigérant/fluide caloporteur.

Le circuit de fluide réfrigérant 2 comprend aussi un dispositif de stockage du fluide réfrigérant. Selon un exemple de réalisation, celui-ci prend la forme d'un accumulateur 47 installé immédiatement en amont du compresseur électrique 4.

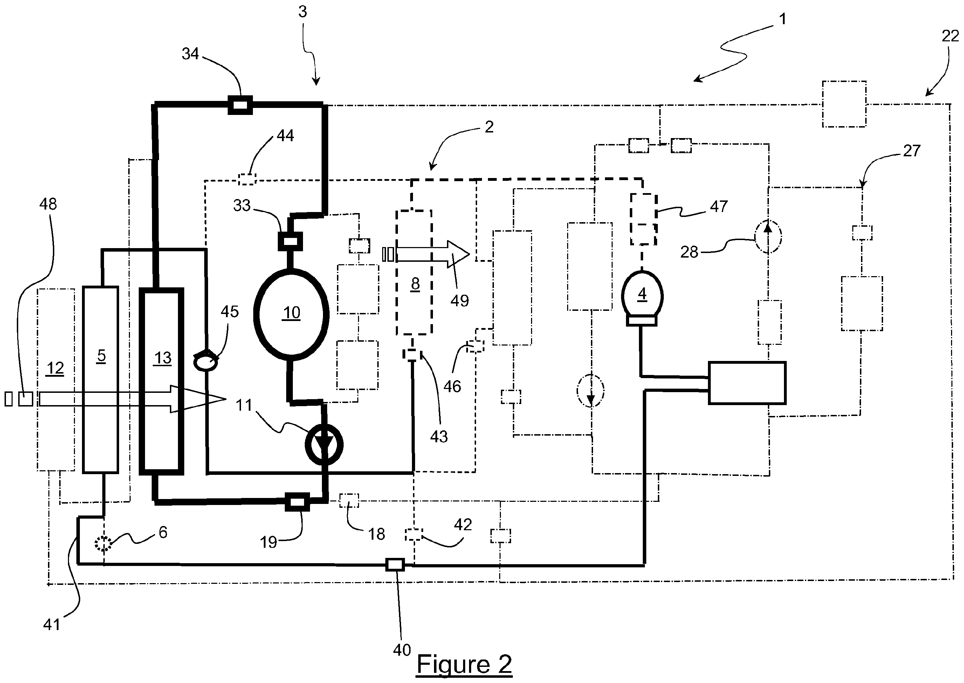

Sur les figures 2 et 3, les traits mixtes représentent les parties du circuit de fluide réfrigérant 2 dans lesquelles circule un fluide réfrigérant à basse pression, comparativement aux traits forts qui représentent les parties de ce même circuit dans lesquelles circule ce même fluide à haute pression, c'est-à-dire une valeur de pression plus élevée que la valeur de la basse pression du fluide. Les traits fins interrompus illustrent les portions du circuit de fluide réfrigérant qui ne sont pas empruntées par le fluide réfrigérant au cours du mode de fonctionnement considéré.

Cette convention de représentation est également mise en œuvre en ce qui concerne le circuit de fluide caloporteur 3, les portions en trait fort illustrant une circulation du fluide caloporteur, alors que les portions en trait mixte montrent une absence de circulation du fluide caloporteur.

La figure 2 montre un mode de fonctionnement du type refroidissement de l'habitacle et refroidissement du groupe électrogène.

Du côté du circuit de fluide réfrigérant 2, la pression et la température du fluide réfrigérant sont élevées par le compresseur 4. Le fluide réfrigérant, dans cet état de haute pression, traverse le deuxième échangeur 9 fluide réfrigérant/fluide caloporteur, par exemple sans qu'aucun échange thermique ne soit réalisé entre le fluide réfrigérant présent dans le deuxième échangeur 9 fluide réfrigérant/fluide caloporteur et le fluide caloporteur présent dans le premier sous-circuit 27. Pour ce faire, la troisième pompe de circulation 28 est inactive.

La première valve deux voies 40 est ouverte, alors que la deuxième valve deux voies 42 est fermée. Le fluide réfrigérant poursuit donc son parcours en direction du premier organe de détente 6. Le fluide réfrigérant n'est pas détendu par ce dernier, et il passe par la conduite de contournement 41 pour rejoindre l'échangeur de chaleur extérieur 5.

En traversant cet échangeur de chaleur extérieur 5, le fluide réfrigérant cède des calories au flux d'air extérieur, ici référencé 48. La troisième valve deux voies 44 est fermée, ce qui oblige le fluide réfrigérant à circuler au travers du clapet anti-retour 45. Le troisième organe de détente 46 est placé dans une position fermée alors que le deuxième organe de détente 43 est placé dans une position où il met en œuvre une détente du fluide réfrigérant.

Le fluide réfrigérant ainsi détendu traverse l'évaporateur 8 et capte des calories présentes dans le flux d'air intérieur, référencé ici 49. On assure ainsi le refroidissement de l'habitacle du véhicule.

Le fluide réfrigérant retourne au compresseur 4 en passant au travers de l'accumulateur 47.

En ce qui concerne le circuit de fluide caloporteur 3, la première pompe de circulation 11 est activée. La deuxième vanne deux voies 19 est ouverte, alors que la première vanne deux voies 18 est fermée. Le fluide caloporteur pénètre dans le deuxième radiateur 13, ce dernier opérant un échange thermique entre ce fluide caloporteur et le flux d'air extérieur 48 de manière à refroidir le fluide caloporteur.

La quatrième vanne deux voies 34 est placée en position ouverte, alors que la sixième vanne deux voies 36, la septième vanne deux voies 37 et la dixième vanne deux voies 50 sont fermées. Le fluide caloporteur passe alors au travers du premier échangeur thermique 10, la troisième vanne deux voies 33 étant ouverte.

Le groupe électrogène est ainsi refroidit par le fluide caloporteur qui traverse son échangeur thermique dédié, c'est-à-dire le premier échangeur thermique 10. Après avoir traversé celui-ci, le fluide caloporteur retourne vers la première pompe de circulation 11.

La figure 3 illustre un mode de fonctionnement correspondant au chauffage de l'habitacle du véhicule à partir de calories générées par le circuit de fluide réfrigérant 2. Ce mode de fonctionnement présente un risque de givrage de l'échangeur de chaleur extérieur 5.

La pression et la température du fluide réfrigérant sont élevées par le compresseur 4. Le fluide réfrigérant, dans cet état de haute pression, traverse le deuxième échangeur 9 fluide réfrigérant/fluide caloporteur, et cède ses calories au fluide caloporteur qui circule dans le premier sous-circuit 27, une telle circulation étant opérée par une activation de la troisième pompe de circulation 28.

La première valve deux voies 40 est ouverte, alors que la deuxième valve deux voies 42 est fermée. Le fluide réfrigérant poursuit donc son parcours en direction du premier organe de détente 6 où il subit un abaissement de sa pression. Dans cette situation, le fluide réfrigérant n'emprunte pas la conduite de contournement 41. Le fluide réfrigérant ainsi détendu traverse ensuite l'échangeur de chaleur extérieur 5, ce qui se traduit par un refroidissement du flux d'air extérieur 48.

La troisième valve deux voies 44 est ouverte, ce qui permet au fluide réfrigérant de rejoindre le compresseur 4 via l'accumulateur 47.

L'échangeur de chaleur extérieur 5 fonctionne ici comme un évaporateur. Selon l'invention, le risque de givrage de cet échangeur de chaleur extérieur 5 est évité par le moyen de contrôle 14 combiné à la disposition des deux radiateurs et de l'échangeur de chaleur extérieur. C'est ainsi que la deuxième vanne deux voies 19 est placée en position fermée, interdisant ainsi toute circulation de fluide caloporteur vers le deuxième radiateur 13.

La deuxième vanne deux voies 18 et la cinquième vanne deux voies 35 sont placées en position ouverte de manière à autoriser une circulation du fluide caloporteur depuis la première branche 15 vers la troisième branche 17 contenant le premier radiateur 12, une telle circulation étant mise en œuvre par une activation de la première pompe de circulation 11.

Le fluide caloporteur, chauffé par le premier échangeur thermique 10, cède ses calories au flux d'air extérieur 48 par l'intermédiaire du premier radiateur 12. Ce dernier est placé en amont de l'échangeur de chaleur extérieur 5, selon le sens de déplacement du flux d'air extérieur 45. Ce flux d'air extérieur ainsi chauffé génère un écart de température qui évite tout phénomène de givrage sur l'échangeur de chaleur extérieur 5.

Le fluide caloporteur rejoint ensuite la quatrième vanne deux voies 34 et poursuit son retour vers le premier échangeur thermique 10.

Selon une variante de réalisation, il possible d'ouvrir simultanément la première vanne deux voies 18 et la deuxième vanne deux voies 19, de manière à autoriser une circulation du fluide caloporteur à la fois dans le premier radiateur 12 et dans le deuxième radiateur 13.

Dans la description ci-dessus, le premier organe de détente 6, le deuxième organe de détente 43 et/ou le troisième organe de détente 46 sont formés, notamment, chacun par un organe de détente thermostatique, un orifice calibré ou encore un détendeur électronique commandé par une stratégie de pilotage mise en œuvre par un dispositif de contrôle.

## Revendications

1. Dispositif de conditionnement thermique pour un véhicule électrique automobile (1) comprenant un circuit de fluide réfrigérant (2) et un circuit de fluide caloporteur (3),
- le circuit de fluide réfrigérant (2) comprenant au moins un compresseur (4), un échangeur de chaleur extérieur (5), un premier organe de détente (6) installé entre le compresseur (4) et l'échangeur de chaleur extérieur (5), et deux échangeurs de chaleur intérieurs (7, 8, 9), dont un évaporateur (8),
- le circuit de fluide caloporteur (3) comprenant au moins un premier échangeur thermique (10) apte à être associé à un composant d'une chaine électrique de traction, une première pompe de circulation (11) du fluide caloporteur, un premier radiateur (12) et un deuxième radiateur (13),
- le premier radiateur (12), l'échangeur de chaleur extérieur (5) et le deuxième radiateur (13) étant agencés pour être traversés selon cet ordre par un flux d'air extérieur (48),
- le circuit de fluide caloporteur (3) comprenant un moyen de contrôle (14) de la circulation du fluide caloporteur apte à :
- opérer une circulation du fluide caloporteur entre le premier échangeur thermique (10) et le deuxième radiateur (13), et/ou
- opérer une circulation du fluide caloporteur entre le premier échangeur thermique (10) et le premier radiateur (12), de manière à chauffer le flux d'air extérieur (48) préalablement à sa traversée de l'échangeur de chaleur extérieur (5), dans lequel le circuit de fluide caloporteur (3) comprend une première branche (15) dans laquelle est installé le premier échangeur thermique (10), une deuxième branche (16) dans laquelle est installé le deuxième radiateur (13), et une troisième branche (17) en parallèle de la deuxième branche (16) et dans laquelle est installé le premier radiateur (12), le moyen de contrôle (14) étant installé à une intersection (20) de la deuxième branche (16) et de la troisième branche (17),
le dispositif étant **caractérisé par** le moyen de contrôle (14) comprenant une première vanne deux voies (18) apte à mettre en communication la première branche (15) avec la troisième branche (17), ainsi qu'une deuxième vanne deux voies (19) apte à mettre en communication la première branche (15) avec la deuxième branche (16), l'autre échangeur de chaleur intérieur (7, 8, 9) étant un échangeur fluide réfrigérant/fluide caloporteur (9), le circuit de fluide caloporteur (3) comprenant un échangeur thermique (26) agencé pour transférer des calories présentes dans le fluide caloporteur au flux d'air intérieur envoyé dans l'habitacle, cet échangeur (26) étant combiné à l'échangeur de type fluide réfrigérant/fluide caloporteur (9) en formant un sous-circuit (27), une pompe de circulation (28) étant installée dans ledit sous-circuit (27), ainsi qu'un radiateur électrique de chauffage (52), le sous-circuit (27) étant raccordé au circuit de fluide caloporteur (3), en étant installé en parallèle desdites branches (15, 16, 17).

2. Dispositif selon l'une des revendications précédentes, dans lequel la première vanne deux voies (18) est installée dans la troisième branche (17) entre l'intersection (20) et le premier radiateur (12), alors que la deuxième vanne deux voies (19) est installée dans la deuxième branche (16) entre l'intersection (20) et le deuxième radiateur (13).

3. Dispositif selon l'une quelconque des revendications précédentes, dans lequel la troisième branche (17) est raccordée à la deuxième branche (16) en aval du deuxième radiateur (13).

4. Dispositif selon l'une quelconque des revendications précédentes, dans lequel la première branche (15) reçoit la première pompe de circulation (11).

5. Dispositif selon l'une quelconque des revendications précédentes, dans lequel la première pompe de circulation (11) est apte à mettre en circulation le fluide caloporteur dans la première branche (15), dans la deuxième branche (16) et/ou dans la troisième branche (17).

6. Chaîne électrique de traction pour un véhicule électrique comprenant un dispositif de conditionnement thermique (1) selon l'une quelconque des revendications précédentes, ladite chaîne comprenant au moins un moteur électrique opérant le déplacement du véhicule électrique, une batterie et un groupe électrogène qui forme le composant associé au premier échangeur thermique (10).

7. Chaîne selon la revendication 6, dans laquelle le circuit de fluide caloporteur (3) comprend :
- un deuxième échangeur thermique (21) associé au moteur électrique,
- un troisième échangeur thermique (23) associé à la batterie,
- un quatrième échangeur thermique (26) apte à chauffer un flux d'air intérieur (49) envoyé dans un habitacle du véhicule.

8. Chaîne selon la revendication 7, dans laquelle le circuit de fluide réfrigérant (2) comprend un échangeur fluide réfrigérant/fluide caloporteur (29) agencé pour influencer la température du troisième échangeur thermique (23), un deuxième échangeur fluide réfrigérant/fluide caloporteur (9) agencé pour influencer la température du quatrième échangeur thermique (26), l'échangeur de chaleur intérieur (7) étant traversé par le flux d'air intérieur (49) et forme un évaporateur (8).

9. Chaîne selon l'une quelconque des revendications 6 à 8, dans laquelle le circuit de fluide caloporteur (3) comprend un échangeur thermique (31) associé à un dispositif de freinage du véhicule.

10. Chaîne selon l'une quelconque des revendications 6 à 9, dans laquelle le circuit de fluide caloporteur (3) comprend un échangeur thermique (32) associé à un dispositif de stockage thermique.

## Patentansprüche

1. Vorrichtung zur thermischen Konditionierung für einen Elektrokraftwagen (1), welche einen Kältemittelkreislauf (2) und einen Wärmeträgerfluidkreislauf (3) umfasst,
- wobei der Kältemittelkreislauf (2) wenigstens einen Kompressor (4), einen äußeren Wärmetauscher (5), ein erstes Expansionsorgan (6), das zwischen dem Kompressor (4) und dem äußeren Wärmetauscher (5) eingebaut ist, und zwei innere Wärmetauscher (7, 8, 9), darunter einen Verdampfer (8) und einen Wärmetauscher Kältemittel/Wärmeträgerfluid (9), umfasst,
- wobei der Wärmeträgerfluidkreislauf (3) wenigstens einen ersten Wärmetauscher (10), der einer Komponente eines elektrischen Antriebsstranges zugeordnet sein kann, eine erste Umwälzpumpe (11) des Wärmeträgerfluids, einen ersten Radiator (12) und einen zweiten Radiator (13) umfasst,
- wobei der erste Radiator (12), der äußere Wärmetauscher (5) und der zweite Radiator (13) dafür eingerichtet sind, in dieser Reihenfolge von einem Außenluftstrom (48) durchströmt zu werden, **dadurch gekennzeichnet, dass** der Wärmeträgerfluidkreislauf (3) ein Mittel zur Steuerung (14) der Strömung des Wärmeträgerfluids umfasst, das geeignet ist:
- eine Strömung des Wärmeträgerfluids zwischen dem ersten Wärmetauscher (10) und dem zweiten Radiator (13) zu bewirken, und/oder
- eine Strömung des Wärmeträgerfluids zwischen dem ersten Wärmetauscher (10) und dem ersten Radiator (12) zu bewirken, um den Außenluftstrom (48) vor seiner Durchquerung des äußeren Wärmetauschers (5) zu erwärmen, wobei der Wärmeträgerfluidkreislauf (3) einen ersten Zweig (15), in welchem der erste Wärmetauscher (10) installiert ist, einen zweiten Zweig (16), in welchem der zweite Radiator (13) installiert ist, und einen dritten Zweig (17), der zum zweiten Zweig (16) parallel ist und in dem der erste Radiator (12) installiert ist, umfasst, wobei das Steuerungsmittel (14) an einem Schnittpunkt (20) des zweiten Zweiges (16) und des dritten Zweiges (17) installiert ist,
wobei die Vorrichtung **dadurch gekennzeichnet ist, dass** das Steuerungsmittel (14) ein erstes Zweiwegeventil (18), das geeignet ist, eine Verbindung des ersten Zweiges (15) mit dem dritten Zweig (17) herzustellen, sowie ein zweites Zweiwegeventil (19), das geeignet ist, eine Verbindung des ersten Zweiges (15) mit dem zweiten Zweig (16) herzustellen, umfasst, und
wobei der Wärmeträgerfluidkreislauf (3) einen Wärmetauscher (26), der dafür eingerichtet ist, im Wärmeträgerfluid vorhandene Wärme an den Innenluftstrom abzugeben, der in den Innenraum eingeleitet wird, wobei dieser Wärmetauscher (26) mit dem Wärmetauscher vom Typ Kältemittel/Wärmeträgerfluid (9) kombiniert ist, indem ein Teilkreislauf (27) gebildet wird, eine Umwälzpumpe (28), die in dem Teilkreislauf (27) installiert ist, sowie einen elektrischen Heizstrahler (52) umfasst, wobei der Teilkreislauf (27) an den Wärmeträgerfluidkreislauf (3) angeschlossen ist, wobei er parallel zu den Zweigen (15, 16, 17) installiert ist.

2. Vorrichtung nach einem der vorhergehenden Ansprüche, wobei das erste Zweiwegeventil (18) im dritten Zweig (17) zwischen dem Schnittpunkt (20) und dem ersten Radiator (12) installiert ist, während das zweite Zweiwegeventil (19) im zweiten Zweig (16) zwischen dem Schnittpunkt (20) und dem zweiten Radiator (13) installiert ist.

3. Vorrichtung nach einem der vorhergehenden Ansprüche, wobei der dritte Zweig (17) an den zweiten Zweig (16) stromabwärts des zweiten Radiators (13) angeschlossen ist.

4. Vorrichtung nach einem der vorhergehenden Ansprüche, wobei der erste Zweig (15) die erste Umwälzpumpe (11) aufnimmt.

5. Vorrichtung nach einem der vorhergehenden Ansprüche, wobei die erste Umwälzpumpe (11) geeignet ist, das Wärmeträgerfluid im ersten Zweig (15), im zweiten Zweig (16) und/oder im dritten Zweig (17) umzuwälzen.

6. Elektrischer Antriebsstrang für ein Elektrofahrzeug, welches eine Vorrichtung zur thermischen Konditionierung (1) nach einem der vorhergehenden Ansprüche umfasst, wobei der Antriebsstrang wenigstens einen Elektromotor, der die Bewegung des Elektrofahrzeugs bewirkt, eine Batterie und ein Stromaggregat, welches die dem ersten Wärmetauscher (10) zugeordnete Komponente bildet, umfasst.

7. Antriebsstrang nach Anspruch 6, wobei der Wärmeträgerfluidkreislauf (3) umfasst:
- einen zweiten Wärmetauscher (21), der dem Elektromotor zugeordnet ist,
- einen dritten Wärmetauscher (23), der der Batterie zugeordnet ist,
- einen vierten Wärmetauscher (26), der geeignet ist, einen Innenluftstrom (49) zu erwärmen, der in einen Innenraum des Fahrzeugs eingeleitet wird.

8. Antriebsstrang nach Anspruch 7, wobei der Kältemittelkreislauf (2) einen Wärmetauscher Kältemittel/Wärmeträgerfluid (29), der dafür eingerichtet ist, die Temperatur des dritten Wärmetauschers (23) zu beeinflussen, und einen zweiten Wärmetauscher Kältemittel/Wärmeträgerfluid (9), der dafür eingerichtet ist, die Temperatur des vierten Wärmetauschers (26) zu beeinflussen, umfasst, wobei der innere Wärmetauscher (7) von dem Innenluftstrom (49) durchströmt wird und einen Verdampfer (8) bildet.

9. Antriebsstrang nach einem der Ansprüche 6 bis 8, wobei der Wärmeträgerfluidkreislauf (3) einen Wärmetauscher (31) umfasst, der einer Bremsvorrichtung des Fahrzeugs zugeordnet ist.

10. Antriebsstrang nach einem der Ansprüche 6 bis 9, wobei der Wärmeträgerfluidkreislauf (3) einen Wärmetauscher (32) umfasst, der einer Wärmespeichervorrichtung zugeordnet ist.

## Claims

1. Thermal conditioning device for an electric vehicle (1) comprising a coolant circuit (2) and a heat-transfer fluid circuit (3),
- the coolant circuit (2) comprising at least one compressor (4), an external heat exchanger (5), a first expansion member (6) installed between the compressor (4) and the external heat exchanger (5), and two internal heat exchangers (7, 8, 9), including an evaporator (8) and a coolant/heat-transfer fluid exchanger (9),
- the heat-transfer fluid circuit (3) comprising at least one first heat exchanger (10) that can be associated with a component of an electric power chain, a first heat-transfer fluid circulation pump (11), a first radiator (12) and a second radiator (13),
- the first radiator (12), the external heat exchanger (5) and the second radiator (13) being arranged to be passed through in that order by an outside air flow (48),
**characterized in that** the heat-transfer fluid circuit (3) comprises a means (14) for controlling the circulation of the heat-transfer fluid that can:
- apply a circulation of the heat-transfer fluid between the first heat exchanger (10) and the second radiator (13), and/or
- apply a circulation of the heat-transfer fluid between the first heat exchanger (10) and the first radiator (12), so as to heat up the outside air flow (48) prior to it passing through the external heat exchanger (5), in which the heat-transfer fluid circuit (3) comprises a first branch (15) in which the first heat exchanger (10) is installed, a second branch (16) in which the second radiator (13) is installed, and a third branch (17) in parallel with the second branch (16) and in which the first radiator (12) is installed, the control means (14) being installed at an intersection (20) of the second branch (16) and the third branch (17),
the device being **characterized by** the control means (14) comprising a first two-way valve (18) capable of connecting the first branch (15) with the third branch (17), and a second two-way valve (19) capable of connecting the first branch (15) with the second branch (16), and the heat-transfer fluid circuit (3) comprising a heat exchanger (26) arranged to transfer calories present in the heat-transfer fluid to the inside air flow sent into the interior, this exchanger (26) being combined with the exchanger of coolant/heat-transfer fluid type (9) to form a sub-circuit (27), a circulation pump (28) being installed in said sub-circuit (27), and an electric heating radiator (52), the sub-circuit (27) being connected to the heat-transfer fluid circuit (3), by being installed in parallel with said branches (15, 16, 17).

2. Device according to one of the preceding claims, in which the first two-way valve (18) is installed in the third branch (17) between the intersection (20) and the first radiator (12), while the second two-way valve (19) is installed in the second branch (16) between the intersection (20) and the second radiator (13) .

3. Device according to either one of the preceding claims, in which the third branch (17) is connected to the second branch (16) downstream of the second radiator (13).

4. Device according to any one of the preceding claims, in which the first branch (15) receives the first circulation pump (11).

5. Device according to any one of the preceding claims, in which the first circulation pump (11) is capable of circulating the heat-transfer fluid in the first branch (15), in the second branch (16) and/or in the third branch (17).

6. Electric power chain for an electric vehicle comprising a thermal conditioning device (1) according to any one of the preceding claims, said chain comprising at least one electric motor working movement of the electric vehicle, a battery and a generator set which forms the component associated with the first heat exchanger (10).

7. Power chain according to Claim 6, in which the heat-transfer fluid circuit (3) comprises:
- a second heat exchanger (21) associated with the electric motor,
- a third heat exchanger (23) associated with the battery,
- a fourth heat exchanger (26) capable of heating an inside air flow (49) sent into an interior of the vehicle.

8. Power chain according to Claim 7, in which the coolant circuit (2) comprises a coolant/heat-transfer fluid exchanger (29) arranged to influence the temperature of the third heat exchanger (23), a second coolant/heat-transfer fluid exchanger (9) arranged to influence the temperature of the fourth heat exchanger (26), the internal heat exchanger (7) being passed through by the inside air flow (49) and forming an evaporator (8).

9. Power chain according to any one of Claims 6 to 8, in which the heat-transfer fluid circuit (3) comprises a heat exchanger (31) associated with a vehicle braking device.

10. Power chain according to any one of Claims 6 to 9, in which the heat-transfer fluid circuit (3) comprises a heat exchanger (32) associated with a thermal storage device.
